# EUROPEAN PATENT APPLICATION

(11) **EP 4 586 472 A1**
(43) Date of publication of application: **16.07.2025**
(21) Application number: 24151550.1
(22) Date of filing: 12.01.2024
(51) Int. Cl.: H02K 5/22, A61C 17/34, B25F 5/02, H02K 7/14, B26B 19/00, H02K 11/00

(54) **ELECTRONIC APPARATUS**

(71) Applicant: Koninklijke Philips N.V., 5656 AG Eindhoven (NL)
(72) Inventor: VRIELINK, Riëlle Annabel, 5656 AG Eindhoven (NL); HEEREMA, Gijsbert Marius, 5656 AG Eindhoven (NL); HAAGSMA, Hendrik Klaas, 5656 AG Eindhoven (NL); JENA, Purnendu, 5656 AG Eindhoven (NL)
(74) Representative: Philips Intellectual Property & Standards

(57) **Abstract**

The subject-matter of the present disclosure relates to an electronic apparatus (100) such as a personal care device. The apparatus comprises an electric motor (102) comprising a first motor terminal (104) and a second motor terminal (106), a printed circuit board assembly 'PCBA' (108), first (112) and second (114) terminal connectors configured to electrically couple the PCBA (108) to the first (104) and second (106) terminal of the electric motor (102), and a terminal connector holder 'TCH' (126). The TCH (126) comprises a set of channels (128) corresponding to a shape of the first (112) and second (114) terminal connectors, with each channel in the set being configured to decouple a force applied to a terminal connector from the PCBA.

## Description

### FIELD OF THE INVENTION

The subject-matter of the present disclosure relates to an electronic apparatus and improving repairability thereof. In particular, the present disclosure relates to personal care devices, such as grooming devices (hair clippers, etc), beauty devices (epilators, etc), and toothbrushes.

### BACKGROUND OF THE INVENTION

The 'right to repair' movement has been gaining recent traction around the world, with many governments, notably the EU, now legislating to make right to repair a consumer right. EU legislation states that, *inter alia,* devices need to be able to be opened by the consumer (or a professional) and that electrical parts inside the device should be replaceable.

Many existing electronics devices are not fit for domestic home repair. Reasons range from complex component interconnectivity to the simple fact that many domestic device users are not able to solder together replacement parts.

To address this issue, some electronic devices have started utilising rigid and/or detachable connector components which are readily accessible and allow for greater repairability by removing a need to solder connections. However, there is a problem that such devices, while more repairable, are also more prone to damage from forces applied to the connectors during use (e.g., from device handling/mishandling, vibrations of internal components, and so on) coupling to other components of the device.

Therefore a new approach to electric device design to make them suitable for right to repair legislation is highly desirable.

### SUMMARY OF THE INVENTION

It is an aim of the subject-matter of the present disclosure to improve on the prior art.

The present invention is defined according to the independent claims. Additional features will be appreciated from the dependent claims and the description herein. Any embodiments which are described but which do not fall within the scope of the claims are to be interpreted merely as examples useful for a better understanding of the invention.

According to a first aspect of the present invention, there is provided an electronic apparatus such as a personal care device, personal grooming device, personal beauty device, or the like. The apparatus comprises an electric motor comprising a first motor terminal and a second motor terminal, a printed circuit board assembly 'PCBA', first and second terminal connectors configured to electrically couple the PCBA to the first and second terminal of the electric motor and a terminal connector holder `TCH'. The TCH comprises a set of channels corresponding to a shape of the first and second terminal connectors, with each channel in the set being configured to decouple a force applied to a terminal connector from the PCBA.

Suitably, configuring a channel to decouple a force applied to a terminal connector from the PCBA may comprise forming the channel with a predetermined dimensional tolerance with respect to a size of the terminal connector arranged in the channel. In an example, at least one channel (or subset of channels) in the set of channels is configured to decouple a force arising from motor operation.

In an example, the first and second terminal connectors are configured in a predetermined tortuous shape, and the set of channels correspond to the rigid predetermined tortuous shape of the first and second terminal connectors.

In an example, each channel in the set of channels comprises an open side in a common orientation, with the first and second terminal connectors being insertable into the set of channels via the open sides. In a related example, the terminal connector holder comprises a cover part configured to cover the open sides of the channels, after insertion of the terminal connectors into the set of channels. Benefits of configuring the channels with a common insertion direction include ease of installation and replacement of the terminal connectors, and also prevention of unintended tilt in the terminal connectors once installed.

In an example, the first and second terminal connectors each comprise means to detachably engage the first and second motor terminals, respectively.

In an example, the means to detachably engage the first and second motor terminals comprise a clip.

In an example, the set of channels comprises a subset of channels configured to receive the means to detachably engage the first and second motor terminals of the first and second terminal connectors.

In an example, the set of channels are configured to align the means to detachably engage the first and second motor terminals with the first and second motor terminals, respectively.

In an example, the TCH comprises electrically insulating material, such as a plastic.

In an example, the TCH comprises means to detachably attach to the PCBA.

In an example, the TCH comprises means to secure the TCH to a body of the electronic apparatus.

These and other aspects of the present invention will be apparent from and elucidated with reference to the embodiment(s) described hereinafter.

As used herein, unless otherwise expressly specified, all numbers such as those expressing values, ranges, amounts or percentages may be read as if prefaced by the word "about", even if the term does not expressly appear. The term "about", or substantially, when used herein means +/- 5% of the stated value. Also, any numerical range recited herein is intended to include all sub-ranges subsumed therein, and the terms "from" and "to" a pair of values are intended to indicate such values are included in the range. Singular encompasses plural and vice versa. Additionally, although the present invention has been described in terms of "comprising", the processes, materials, and coating compositions detailed herein may also be described as "consisting essentially of" or "consisting of".

### BRIEF DESCRIPTION OF THE DRAWINGS

The embodiments of the present inventions may be best understood with reference to the accompanying figures, in which:
Fig. 1 shows a side view of an example electronic apparatus;
Fig. 2 shows a part of a front view of an example electronic apparatus; and
Fig. 3 shoes a perspective view of a part of an example electronic apparatus;
Fig. 4 shows another perspective view of a part of an example electronic apparatus.

### DETAILED DESCRIPTION OF THE EMBODIMENTS

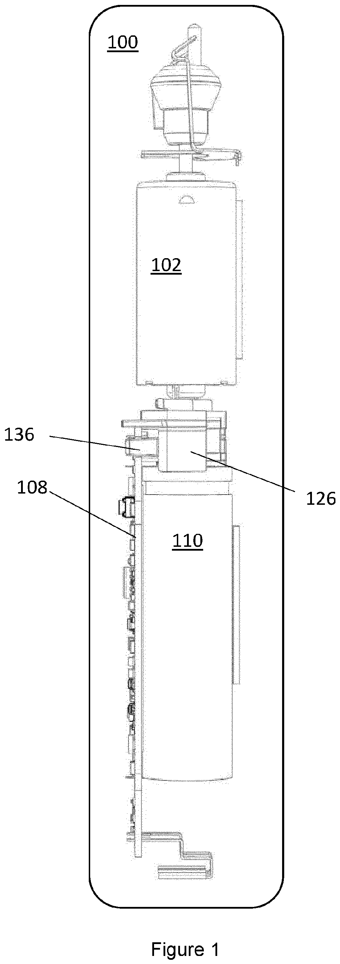

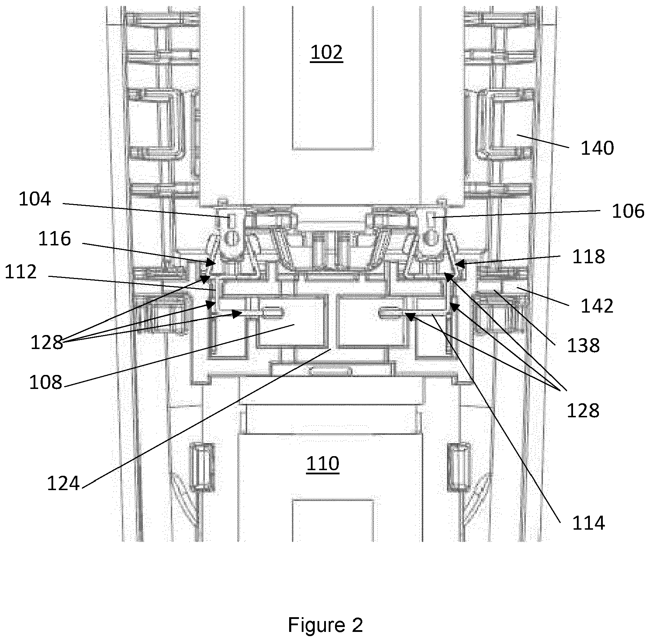

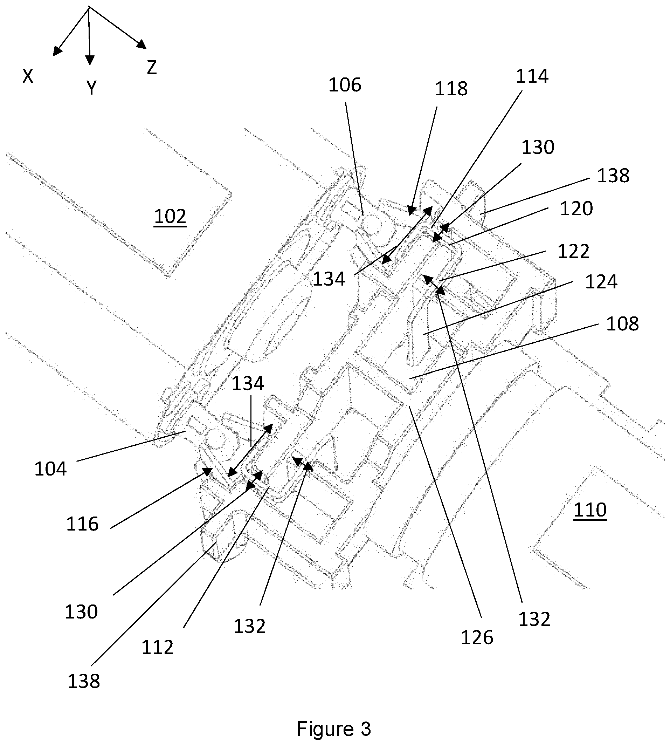

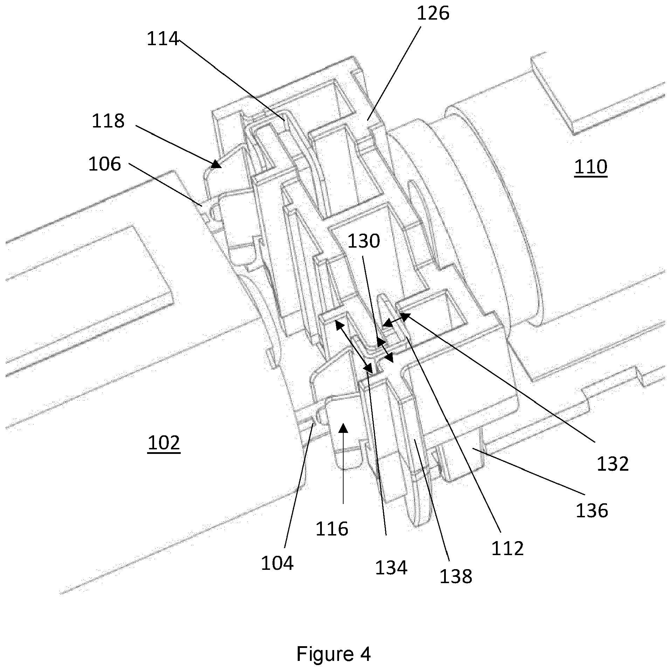

With reference to Figs. 1 to 4, there is shown an electronic apparatus 100. The electronic apparatus comprises an electric motor 102, which is suitably configured to drive an operational head (not shown) of the apparatus 100. In one example, the head may comprise a cutter configured for use as a trimmer, shaver, or clipper, or the like. In another example, the head may comprise a beauty tool, such as an epilator. In yet another example, the head may comprise a toothbrush. Suitably, the electronic apparatus 100 may be considered as a personal care device.

The electric motor 102 comprises a first motor terminal 104 and a second motor terminal 106. The motor terminals 104, 106 are configured to receive electric current to drive the motor 102. Suitably, the motor terminals are electrically coupled to a printed circuit board assembly `PCBA' 108.

The PCBA 108 comprises a plurality of electrical components such as connectors, capacitors, transistors, logic gates, and the like, as will be familiar to those in the art. The PCBA 108 is configured to receive electrical power from a battery 110, and in turn suitably control electrical power supplied to the motor terminals 104, 106. Suitably, the apparatus 100 comprises first and second terminal connectors 112, 114 in order to electrically couple the PCBA 108 to the corresponding the first and second motor terminals 104, 106, respectively. Suitably, the first and second terminal connectors 112, 114 are electrically conducting.

Here the first and second terminal connectors 112, 114, are designed to facilitate ease of repair of the apparatus 100. In particular, each of the terminal connectors 112, 114 are configured to detachably engage their respective motor terminals 104, 106. That is, the first terminal connector 112 comprises means to detachably engage the first motor terminal 104, and the second terminal connector 114 comprises means to detachably engage the second motor terminal 106.

Suitably, such means 112, 114 may be provided at one end (i.e., a first end) of each of the connectors 112, 114. Put another way, the first and second terminal connectors 112, 114, may each comprise a head part 116, 118 configured to releasably couple to the first and second motor terminals 104, 106, respectively. In the present example, the head parts 116, 118 each comprise scraping means to grip onto the motor terminals 104, 106 by friction (such as by clamping). As shown, such a scraping means may comprise a clip comprising suitably biased limbs which grip the motor terminals 104, 106. The clip (or rather, limbs thereof) may also comprise a lead in shape, such as a flared arrangement of the limbs, to facilitate connection of the clip with the motor terminals.

The other (second) end of each of the terminal connectors 112, 114 is suitably attached to the PCBA 108. Such attachment may also be detachable, if desired, so as to improve modularity and repairability of the apparatus 100. In the preferred example shown, however, the terminal connectors 112, 114 are fixedly attached to the PCBA 108 by e.g., a solder. In this way, during a repair of the apparatus 100, replacement of the motor 102 may be achieved without impairing the connection to the PCBA 108. If the PCBA 108 needs replacement, then an entire new PCBA 108 (with terminal connectors pre-attached) may be provided, or an electronics specialist with suitable skill may unsolder and resolder the terminal connectors 112, 114.

Suitably, the terminal connectors 112, 114 are configured in a predetermined shape designed to provide rigidity and/or flexibility in certain orientations. The predetermined shape comprises a tortuous path having changes in direction in at least two orthogonal dimensions and preferably at least three orthogonal dimensions. Put another way, the predetermined shape of the terminal connectors is preferably three dimensional.

For example, as shown, and starting from the head portion 118, each terminal connector 112, 114 comprises a first part 120 extending substantially in a z-direction, which changes direction to form a second part 122 extending substantially in an x-direction, which then changes again to form a third part 124 extending substantially in a y-direction (and terminates at the connection to the PCBA 108). The tortuous acts to provide flexibility and strength for the terminal connectors 112, 114 in different orthogonal directions. For example, the first part 120 may be provided with flexibility in the x-dimension and rigidity in the y-dimension, the second part 122 may be flexible in the z direction and rigid in the y dimension, and the third part 124 may be flexible in the z direction and rigid in the x-dimension.

Although the present example shows the terminal connectors 112, 114 having substantially the same shape but mirrored - with respect to a bisecting line in the z direction of the apparatus 100 - it will be appreciated that each of the terminal connectors 112, 114 may be provided with a different shape.

The apparatus 100 also comprises a terminal connector holder 'TCH' 126. The TCH 126 comprises a set of channels 128 corresponding to the predetermined shape of the first and second terminal connectors. Put another way, the TCH 126 comprises channels 128 which are configured to accommodate the tortuous shape of each of the terminal connectors 114, 116. The TCH 126 is suitably formed from an electrically insulating material, such as a plastic.

The channels 128 are preferably formed as an open conduit into which the terminal connectors 112, 114 are receivable. That is, each of the channels 128 comprise an open side which is in a common orientation with the open sides of the other channels 128 (for example, open in a y-direction). In this way, the terminal connectors 112, 114 may be readily inserted into the channels 128 during manufacture or repair, making correct positioning of the terminal connectors 112, 114 more readily achievable, as well as providing ready alignment of the detachable engagement heads 116, 118 with the respective motor terminals 104, 106. In some examples (not shown), the TCH 126 may also comprise a covering part configured to close the open side of the channels 128.

Suitably, each channel 128 in the set is configured to decouple a force applied to a terminal connector 112, 114 from the PCBA 108. Beneficially, decoupling force applied to a terminal connector 112, 114 form the PCBA 108 allows for a more robust repairable device, as the motor 102 may be readily attached to the terminal connectors 112, 114 with a lower risk of damage to the (soldered) connection to the PCBA 108, and during use also allows for dampening of vibrations of the terminal connectors 112, 114 which might otherwise damage the connection to the PCBA 108 due to the fixed shape form of the terminal connectors 112, 114.

To decouple forces, each of the channels 128 are configured to accommodate a respective part of the terminal connectors 112, 114 with a predetermined tolerance (also termed give, or play). That is, the channels 128 are designed to receive a part of the terminal connectors 112, 114 into them while allowing for a very small range of motion of that part of the terminal connectors 112, 114. For example, a tolerance could be set so that the channel is less than about 0.5 mm wider than the received part of the terminal connector 112, 114 (including, for example, between about 0.1 mm and 0.2 mm, or between about 0.2 mm and 0.5 mm), less than about 1 mm wider than the received part of the terminal connector 112, 114 (including, for example, between about 0.5 mm and about 1 mm), or less than 2 mm wider than the received terminal connector 112, 114 (including, for example, about 0.5 mm to about 2 mm, or about 1mm to about 2 mm, or about 1.5 mm to about 2 mm). Put another way, in a default configuration (e.g., freshly manufactured), the channels 128 are preferably arranged so that the relevant parts of the terminal connectors 112, 114 are received into the channels 128 without touching the channels 128; that is, the substantially rigid shape of the terminal connectors 112, 114 allows them to float within the channels. An exception to that may be that the terminal connectors 112, 114 may be arranged to rest on a base on the channels 128 (the base being opposite the channel opening, if present).

In more detail, in the present example the set of channels 128 comprises a first subset of channels 130 corresponding to the first part 120 of each terminal connector 112, 114. The first subset of channels 130 are suitably configured to restrict a range of motion of the terminal connectors 112, 114, in the x-direction, which may arise due to forces arising from operation of the motor 102 (or from other sources such as dropping the apparatus 100). By restricting the motion available at the first part 120 of the terminal connector holders 112, 114, a horizontal (x) direction force such as that arising from the motor 102 may be decoupled from the end of the terminal connector 112, 114 attached to the PCBA 108.

The set of channels 128 also comprises a second subset of channels 132 corresponding to the second part 122 of each terminal connector 112, 114. Suitably, the second subset of channels may be configured to restrict a range of motion of the second part(s) 122 in a z-direction. The second subset of channels may be provided primarily for alignment purposes of the head parts 116, 118 (i.e., to ensure that the head parts 116, 118 are positioned sufficiently towards the motor 102 to enable connection to the motor terminals 104, 106), but may also have the benefit of decoupling z-directional forces, as might occur from usage or dropping the device, from the PCBA 108.

The subset of channels 128 also comprises a third subset of channels 134 corresponding to the means to detachably engage the motor terminals 104, 106. Put another way, the third subset of channels 134 correspond to a shape of the head parts 116, 118 of each of the terminal connectors 112, 114. Here, the third subset of channels 134 are dimensioned relative to a base of the substantially triangular clip. Suitably, the third subset of channels 134 are configured to restrict motion of the head parts 116, 118 (and coupling parts thereof) in the x-direction, which is the direction vibration of the motor terminals 104, 106 most occurs in due to vibration of the motor 102. Also, the third subset of channels 134 aid in alignment of the detachable engagement means onto the motor terminals 104, 106, and in turn aiding in ensuring the scraping force of the detachable engagement heads 116, 118 with the respective motor terminals 104, 106.

In the present examples, the TCH 126 further comprises means 136 to detachably mount, or attach, the TCH 126 to the PCBA 108, thereby fixing the position of the TCH 126 with respect to the PCBA 108. For example, the TCH 126 may comprise a pair of clips comprising biased arms configured to grip onto the PCBA 108.

The TCH 126 may also comprise means 138 to secure the TCH 126 to a body 140 of the electronic apparatus. Such means may take the form of a rib 138 configured to slot into a recess 142 arranged in the body 140, thereby securing the TCH in place within the apparatus 100. Suitably, a pair of ribs 138 may be provided on either side of the TCH 126 to slot into a co-aligned pair of recesses 142 on opposite sides of the body 140.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. An electronic apparatus (100), comprising:
an electric motor (102) comprising a first motor terminal (104) and a second motor terminal (106);
a printed circuit board assembly 'PCBA' (108);
first (112) and second (114) terminal connectors configured to electrically couple the PCBA to the first and second terminal of the electric motor, respectively;
a terminal connector holder (126) comprising a set of channels (128) corresponding to a shape of the first and second terminal connectors, wherein each channel in the set is configured to decouple a force applied to a terminal connector from the PCBA.

2. The apparatus of claim 1, wherein configuring a channel to decouple a force applied to a terminal connector from the PCBA comprises forming the channel with a predetermined dimensional tolerance with respect to a size of the terminal connector arranged in the channel.

3. The apparatus of claim 1 or 2, wherein at least one channel (130) in the set of channels is configured to decouple a force arising from motor operation.

4. The apparatus of any preceding claim, wherein the first and second terminal connectors are configured in a predetermined tortuous shape, and the set of channels correspond to the predetermined tortuous shape of the first and second terminal connectors.

5. The apparatus of any preceding claim, wherein each channel in the set of channels comprises an open side in a common orientation, and wherein the first and second terminal connectors are configured to be insertable into the set of channels via the open sides.

6. The apparatus of claim 5, wherein the terminal connector holder comprises a cover part configured to cover the open sides of the channels, after insertion of the terminal connectors into the set of channels.

7. The apparatus of any preceding claim, wherein the first and second terminal connectors each comprise means (116, 118) to detachably engage the first and second motor terminals, respectively.

8. The apparatus of claim 7, wherein the means to detachably engage the first and second motor terminals comprise a clip.

9. The apparatus of claim 7 or 8, wherein the set of channels comprises channels (134) configured to receive the means to detachably engage the first and second motor terminals of the first and second terminal connectors.

10. The apparatus of any of claims 7 to 9, wherein the set of channels are configured to align the means to detachably engage the first and second motor terminals with the first and second motor terminals, respectively.

11. The apparatus of any preceding claim, wherein the terminal connector holder comprises electrically insulating material.

12. The apparatus of claim 11, wherein the terminal connector holder is formed from a plastic.

13. The apparatus of any preceding claim, wherein the terminal connector holder comprises means (136) to detachably attach to the PCBA.

14. The apparatus of any preceding claim, wherein the terminal connector holder comprises means (138) to secure the terminal connector holder to a body (140) of the electronic apparatus.

15. The apparatus of any preceding claim, wherein the apparatus is a personal care device.
